# DEMANDE DE BREVET EUROPEEN

(11) **EP 0 945 809 A1**
(43) Date de publication de la demande: **29.09.1999**
(21) Numéro de dépôt: 98440063.0
(22) Date de dépôt: 26.03.1998
(51) Int. Cl.: G06F 15/02

(54) **Convertisseur préprogrammé à taux constants pour la conversion de monnaies nationales en monnaie européenne et réciproquement**

(71) Demandeur: Buch, Pierre, F-67202 Wolfisheim (FR)
(72) Inventeur: Buch, Pierre, F-67202 Wolfisheim (FR)

(57) **Abrégé**

Calculatrice électronique de conversion préprogrammée à taux constants pour la conversion de monnaies nationales en monnaie européenne et réciproquement.

L'invention concerne une calculatrice électronique permettant de convertir simplement et rapidement une des devises nationales, dont les taux sont mémorisés lors de la fabrication, en monnaie européenne et réciproquement.

Elle consiste en une unité logique (1) à trois entrées E₁, E₂ et E₃ et à deux sorties S₁ et S₂. Par l'entrée E₁ sont transmises les données d'entrée DE₁ provenant d'une mémoire morte (2) où sont stockés définitivement les divers taux de conversion avec l'abrégé des unités correspondantes. La sélection d'un taux de conversion reste acquise aussi longtemps qu'un autre taux n'est pas sélectionné. Par l'entrée E₂ sont introduites les données des valeurs à convertir. Par l'entrée E₃ sont introduites les données déterminant le sens de la conversion, soit multipliées par le taux de conversion soit par son inverse. La sortie S₁ transmet les données d'entrée DE₂ sans changement. La sortie S₂ transmet la valeur provenant de la conversion des données d'entrée DE₂.

## Description

La présente invention concerne le domaine des calculatrices électroniques. Elle a pour objet un convertisseur préprogrammé à taux constants pour la conversion de monnaies nationales en monnaie européenne et réciproquement.

Dans la perspective de l'instauration de la monnaie unique dans la communauté européenne, il faudra à la population un temps d'adaptation à l'utilisation de cette nouvelle monnaie. La présente invention a pour but de faciliter au maximum cette transition par un système convivial.

Il est actuellement possible d'utiliser une calculatrice classique mais la manipulation n'est pas aussi simple et n'est peut-être pas à la portée de toute personne, puisqu'il faut introduire la valeur de la monnaie à changer et le bon facteur de conversion.

La présente invention a donc pour but de faciliter cette conversion grâce à un système électronique préprogrammé.

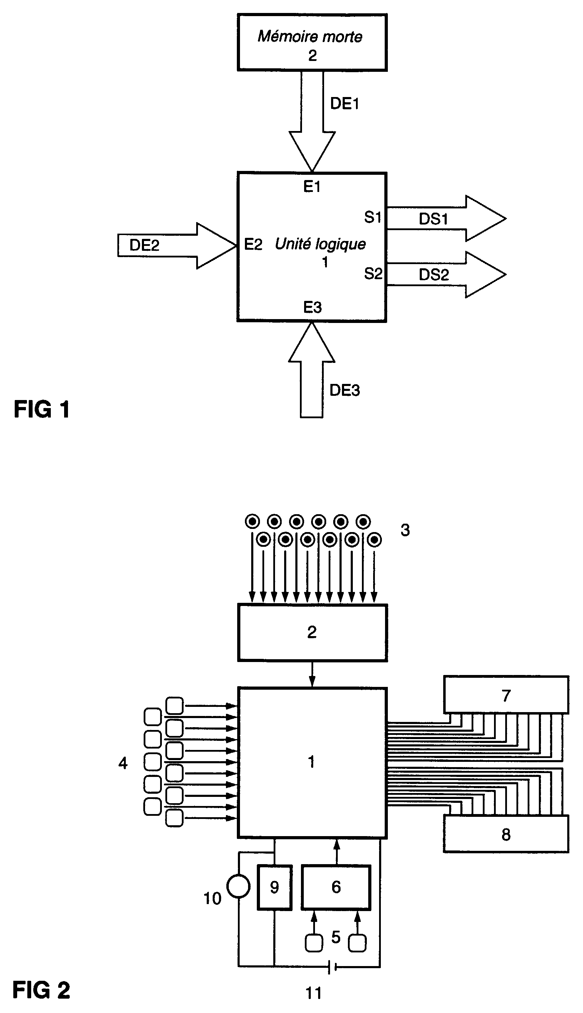

La figure 1 donne une représentation schématique du système. Il consiste en une unité logique (1) à trois entrées E₁, E₂ et E₃ et à deux sorties S₁ et S₂. Par l'entrée E₁ sont transmises les données d'entrée DE₁ provenant d'une mémoire morte (2) où sont stockés les divers taux de conversion. Par l'entrée E₂ sont introduites les données des valeurs à convertir. Par l'entrée E₃ sont introduites les données déterminant le sens de la conversion, soit multipliées par le taux de conversion soit par son inverse. La sortie S₁ transmet les données d'entrée DE₂ sans changement. La sortie S₂ transmet la valeur provenant de la conversion des données d'entrée DE₂.

L'invention se décompose dans les éléments suivants (figure 2):
- une unité logique (1)
- un stock de mémoire morte des divers taux de change (2) des divers pays ainsi que les symboles des unités de monnaie (FF, FB, DM ...) où l'unité logique va chercher l'information nécessaire au traitement. Le chemin d'accès à cette mémoire est déterminé par une simple pression sur une des touches (3). Le chemin d'accès ainsi déterminé reste sélectionné aussi longtemps qu'aucune autre touche de la série (3) n'est pressée,
- une série de onze touches (4) permettant l'introduction des données d'entrée DE₂. Ces dix touches représentent les nombres entiers de 0 à 9 et la virgule. En cas d'absence d'une touche de mise sous tension et en cas d'alimentation par pile, une pression sur l'une de ces touches a aussi pour effet de mettre le système sous tension,
- un inverseur de calcul (6) qui détermine le sens de la conversion ; devise nationale vers Euros ou l'inverse. Cet inverseur est basculé grâce à l'information qui lui arrive par l'intermédiaire d'une des touches (5),
- les touches (5) au nombre de deux ont un triple effet. Premièrement elles déterminent le sens de la conversion, deuxièmement elles déterminent le choix de l'écran (7 ou 8) sur lequel s'afficheront les données d'entrée DE₂ et l'écran où s'affichera la valeur provenant de la conversion des données d'entrée DE₂ et troisièmement la pression sur l'une d'elles déclenche le traitement complet. Pour simplifier la compréhension l'une de ces deux touches est appelée N comme national et l'autre E comme Européen,
- un écran de lecture ou une ligne d'écriture (7) où s'affichera par exemple toujours la valeur d'une monnaie nationale ainsi que le symbole de la monnaie (FF, FB, DM ...),
- un écran de lecture ou une ligne d'écriture (8) où s'affichera toujours la valeur en monnaie européenne suivi des lettres EU,
- un économiseur temporisé (9) qui mettra le système hors tension en cas d'inutilisation,
- une touche de mise sous tension (10) qui sera nécessaire pour éviter la mise sous tension intempestive si ce système est fabriqué sous forme de porte-clefs et alimenté par une pile,
- l'alimentation (11) qui peut être faite par une pile, ou par énergie solaire ou tout autre système adapté,

Le système fonctionne de la manière suivante. Il faut d'abord sélectionner la monnaie considérée (FF, FB, DM,...) en appuyant sur une des touches de devises nationales (3), puis introduire le montant souhaité par l'intermédiaire des touches de chiffres (4). Il suffit ensuite d'appuyer sur une des touches de conversion (5) pour obtenir le résultat. En appuyant sur la touche N le montant d'entrée X s'affiche sur l'écran des devises nationales avec son symbole tandis que sur l'écran de la monnaie européenne s'affiche la contre-valeur en Euros suivi des lettres EU. En appuyant sur la touche E le montant d'entrée X s'affiche sur l'écran des Euros suivi de EU, tandis que sur l'écran des devises nationales s'affiche la contre-valeur en devise nationale suivie de son symbole. On peut en appuyant alternativement sur l'une des touches (5) convertir la valeur d'entrée X en monnaie européenne qui s'affichera par exemple sur l'écran ou la ligne (8), la valeur d'entrée X est alors considérée comme la valeur en devise nationale et s'affiche sur l'écran ou la ligne (7). En appuyant sur l'autre touche le résultat est inversé, c'est-à-dire que la valeur d'entrée X est convertit en monnaie nationale qui s'affichera sur l'écran ou la ligne (7), la valeur d'entrée X est alors considérée comme la valeur en Euros et s'affichera sur l'écran ou la ligne (8).

La présente calculatrice peut avoir diverses variantes. On peut effectivement remplacer les deux touches (5) par une seule touche. Dans ce cas avec une simple pression sur cette touche le système logique considère que la valeur d'entrée X est en devise nationale, il induit alors l'affichage de cette valeur X sur l'écran des devises nationales, convertit cette valeur en contre-valeur Euros et l'affiche sur l'écran Euros. Avec une deuxième pression sur cette même touche le système logique considère que la valeur d'entrée X est en Euros, il induit alors l'affichage de cette valeur X sur l'écran des Euros, convertit cette valeur en contre-valeur nationale et l'affiche sur l'écran des devises nationales. Chaque pression suivante aura pour effet d'inverser le calcul.

Une autre variante est de supprimer la possibilité du choix de la monnaie nationale en supprimant la série des boutons (3) et en programmant le système logique sur un seul taux de conversion avec le symbole de son unité. Il faut alors fabriquer une calculatrice adaptée à chacun des pays membre de la CEE.

Ce système peut aisément être intégré dans une calculatrice électronique traditionelle.

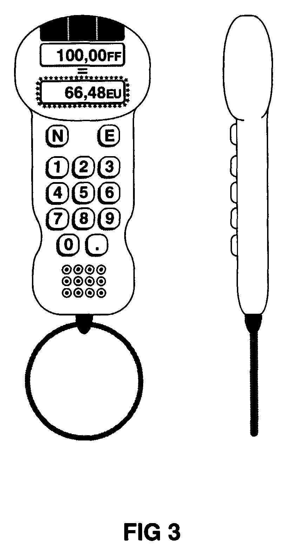

A titre d'exemple non limitatif par les formes et les dimensions, l'ensemble du système peut être placé dans un boîtier de forme allongée (figure 3) muni d'une fixation et d'un anneau et ainsi servir de porte-clefs. Les touches (3) seraient en creux et à fleur du boîtier pour éviter toutes pressions involontaires. Il faudra alors indiquer la monnaie de référence par pression sur une de ces touches à l'aide d'un objet pointu comme un stylo par exemple. L'affichage se fera sur un écran à cristaux liquides comportant deux lignes d'écritures dont la première serait dédiée aux devises nationales et la deuxième à la devise européenne.

## Revendications

1. Calculatrice de conversion de monnaies caractérisée en ce qu'elle combine :
- une unité logique (1) dans laquelle s'opèrent les calculs,
- une mémoire morte (2) non volatile dans laquelle sont stockés, dès la fabrication, des taux fixes de conversion de monnaie ainsi que les symboles de leurs unités correspondantes,
- un clavier à touches (4) permettant d'entrer les valeurs à convertir DE2,
- un inverseur de calcul (6) permettant, par une simple pression de convertir une monnaie nationale en Euro et son inverse par une autre pression,
- deux écrans ou lignes d'affichage (7 et 8) permettant simultanément l'affichage des données d'entrée DE2 ainsi que du résultat DS1 ou DS2.

2. Calculatrice selon la revendication 1, caractérisée en ce qu'elle comporte une unité logique (1) à trois entrées, E1, E2 et E3 et à deux sorties, S1 et S2.

3. Calculatrice selon les revendications 1 et 2, caractérisée en ce qu'elle comporte des touches de sélection (3) permettant de sélectionner un des taux de conversion à la fois, ainsi que le symbole de la monnaie correspondante, contenus dans la mémoire (2).

4. Calculatrice selon la revendication 1 et 2, caractérisée en ce que l'entrée E1 reçoit les informations DE1, se composant d'un taux de conversion ainsi que du symbole d'une monnaie, provenant tous deux de la mémoire morte (2) et sélectionnés par l'intermédiaire des touches de sélection (3).

5. Calculatrice selon la revendication 1 et 2, caractérisée en ce que l'entrée E2 reçoit les informations DE2, correspondant à la valeur de la monnaie à convertir, provenant des touches chiffrées (4) qui permettent d'introduire cette valeur.

6. Calculatrice selon la revendication 1 et 2, caractérisée en ce que l'entrée E3 reçoit les informations DE3, correspondant soit au taux de conversion sélectionné soit à son inverse, provenant de l'inverseur de calcul (6) et dont l'inversion est déterminée par les touches (5).

7. Calculatrice selon l'une des revendications 1 à 6, caractérisée en ce qu'elle comporte un inverseur de calcul (6), commandé par les informations DE_{3,} permettant, par une simple pression sur une des deux touches (5), d'envoyer à l'unité logique les informations DE_{1,} ou leurs inverses par une autre pression sur l'autre des deux touches (5).

8. Calculatrice selon l'une des revendications 1 à 7 caractérisée en ce que l'unité logique est programmée pour prendre en compte les données d'entrée DE₂, et selon les données d'entrée DE₃, les multiplier par les données d'entrée DE₁ du taux de conversion présélectionné, ou leurs inverses.

9. Calculatrice selon l'une des revendications 1 à 2, caractérisée en ce que l'unité logique est programmée de sorte que les valeurs des devises nationales s'affichent toujours sur le même écran ou sur la même ligne d'écran et que la devise européenne s'affiche toujours sur l'autre écran ou l'autre ligne d'écran.

10. Calculatrice selon les revendications 1, 2 et 7, caractérisée en ce qu'elle comporte deux touches de sélection (5) permettant de basculer l'inverseur, ces deux touches pouvant être remplacées par une seule touche à impulsion. Chaque impulsion faisant basculer l'inverseur.
